# EUROPEAN PATENT APPLICATION

(11) **EP 4 657 047 A1**
(43) Date of publication of application: **03.12.2025**
(21) Application number: 24903918.1
(22) Date of filing: 08.10.2024
(51) Int. Cl.: G01N 21/88, G01B 11/00, H01M 10/48

(54) **DATA PROCESSING DEVICE AND METHOD FOR PROVIDING BATTERY INSPECTION INFORMATION**

(30) Priority: 13.12.2023 KR 20230180228
(71) Applicant: LG ENERGY SOLUTION, LTD., Seoul 07335 (KR)
(72) Inventor: KIM, Jaejin, Daejeon 34122 (KR); JANG, Eunah, Daejeon 34122 (KR); JEON, Hyoseung, Daejeon 34122 (KR); KO, Hongjae, Daejeon 34122 (KR); KIM, Shikwon, Daejeon 34122 (KR); KIM, Iksu, Daejeon 34122 (KR); KIM, Jiwon, Daejeon 34122 (KR); YU, Jongseon, Daejeon 34122 (KR); CHA, Yeongeun, Daejeon 34122 (KR)
(74) Representative: Goddar, Heinz J.
(86) International application number: PCT/KR2024/015267
(87) International publication number: WO 2025/127351

(57) **Abstract**

Disclosed is a data processing apparatus for providing battery inspection information according to embodiments of the present invention, which includes at least one processor; and a memory configured to store at least one instruction executed by the at least one processor.

Here, the at least one instruction may include an instruction to collect battery inspection information from a plurality of battery inspection devices; an instruction to generate integrated inspection information for the plurality of battery by collating battery inspection information collected from the plurality of battery inspection devices; and an instruction to output the integrated inspection information through a predefined graphical user interface (GUI).

## Description

### [Technical Field]

This application claims priority to and the benefit of Korean Patent Application No.10-2023-0180228 filed in the Korean Intellectual Property Office on December 13, 2023 the entire contents of which are incorporated herein by reference.

The present invention relates to an apparatus and method for data processing, and more particularly, to a data processing apparatus and method for providing battery inspection information, which may enhance efficiency of battery inspection.

### [Background Art]

Secondary batteries, capable of recharging and reuse, may be used as an energy source for small devices such as mobile phones, tablet PCs and vacuum cleaners, and also used as an energy source for medium and large devices such as automobiles and an energy storage system (ESS) for smart grids.

Secondary batteries may be classified into can-type batteries in which an electrode assembly is built into a cylindrical metal can, and pouch-type batteries in which an electrode assembly is built into a pouch-type case. In general, cylindrical can-type batteries are known to have relatively large capacity and high structural stability.

Batteries may be manufactured by sequentially performing an electrode manufacturing process, an electrode winding process, an assembly process, and an activation process.

Generally, in order to prevent shipment of defective batteries, defect inspection may be performed at each process stage. For example, during an electrode manufacturing process, electrode surface images are collected by a video camera and an operator may monitor whether a defect has occurred on an electrode surface, a location of defect, a type of defect, etc. using the collected images. However, since the inspection device is individually applied to each process equipment, the operator needs to look up inspection information by battery unit and manufacturing process unit, which takes a lot of time for battery inspection and may relate to limitation in inspection accuracy.

As a technology to solve the above problems, an appropriate data processing technology is needed that can further improve time efficiency and accuracy of battery inspection.

### [Detailed Description of the Invention]

### [Technical Problem]

To obviate one or more problems of the related art, embodiments of the present disclosure provide a data processing apparatus for providing battery inspection information.

To obviate one or more problems of the related art, embodiments of the present disclosure also provide a data processing method which is performed by the data processing apparatus.

### [Technical Solution]

In order to achieve the objective of the present disclosure, a data processing apparatus for providing battery inspection information may include at least one processor; and a memory configured to store at least one instruction executed by the at least one processor.

Here, the at least one instruction may include an instruction to collect battery inspection information from a plurality of battery inspection devices; an instruction to generate integrated inspection information for the plurality of battery by collating battery inspection information collected from the plurality of battery inspection devices; and an instruction to output the integrated inspection information through a predefined graphical user interface (GUI).

The instruction to collect battery inspection information may include an instruction to collect battery inspection information from battery inspection devices which are applied to different manufacturing process equipment.

The instruction to collect battery inspection information may include an instruction to collect battery inspection information from each of a first inspection device applied to an electrode manufacturing process equipment, a second inspection device applied to a winding process equipment, a third inspection device applied to an assembling process equipment, and a fourth inspection device applied to an activation process equipment.

The instruction to generate integrated inspection information may include an instruction to generate integrated electrode surface inspection information by collating electrode surface inspection information collected from a first inspection device applied to an electrode manufacturing process equipment and electrode surface inspection information collected from a second inspection device applied to a winding process equipment.

The instruction to generate integrated inspection information may include an instruction to generate integrated dimension inspection information of the battery by collating appearance inspection information of the battery collected from a third inspection device applied to an assembly process equipment and appearance inspection information of the battery collected from a fourth inspection device applied to an activation process equipment.

The instruction to generate integrated inspection information may include an instruction to generate integrated appearance inspection information of the battery by collating electrode surface inspection information collected from a second inspection device applied to a winding process equipment, appearance inspection information of the battery collected from a third inspection device applied to an assembly process equipment, and appearance inspection information of the battery collected from a fourth inspection device applied to an activation process equipment.

The instruction to output the integrated inspection information through the predefined graphical user interface may include an instruction to visualize and output the integrated inspection information according to at least one output item input by a user.

The instruction to output the integrated inspection information through the predefined graphical user interface may include an instruction to visualize and output a location of defect occurrence on an electrode surface using the integrated electrode surface inspection information.

The instruction to output the integrated inspection information through the predefined graphical user interface may include an instruction to visualize and output a dimensional trend for a plurality of batteries using the integrated dimension inspection information.

The instruction to output the integrated inspection information through the predefined graphical user interface may include an instruction to visualize and output a location of defect occurrence on an outer surface of a battery using the integrated appearance inspection information.

According to another embodiment of the present disclosure, a data processing method for providing battery inspection information may include collecting battery inspection information from a plurality of battery inspection devices; generating integrated inspection information for the plurality of battery by collating battery inspection information collected from the plurality of battery inspection devices; and outputting the integrated inspection information through a predefined graphical user interface (GUI).

The collecting battery inspection information may include collecting battery inspection information from battery inspection devices which are applied to different manufacturing process equipment.

The collecting battery inspection information may include collecting battery inspection information from each of a first inspection device applied to an electrode manufacturing process equipment, a second inspection device applied to a winding process equipment, a third inspection device applied to an assembling process equipment, and a fourth inspection device applied to an activation process equipment.

The generating the integrated inspection information may include generating integrated electrode surface inspection information by collating electrode surface inspection information collected from a first inspection device applied to an electrode manufacturing process equipment and electrode surface inspection information collected from a second inspection device applied to a winding process equipment.

The generating the integrated inspection information may include generating integrated dimension inspection information of the battery by collating appearance inspection information of the battery collected from a third inspection device applied to an assembly process equipment and appearance inspection information of the battery collected from a fourth inspection device applied to an activation process equipment.

The generating the integrated inspection information may include generating integrated appearance inspection information of the battery by collating electrode surface inspection information collected from a second inspection device applied to a winding process equipment, appearance inspection information of the battery collected from a third inspection device applied to an assembly process equipment, and appearance inspection information of the battery collected from a fourth inspection device applied to an activation process equipment.

The outputting the integrated inspection information through a predefined graphical user interface (GUI) may include visualizing and outputting the integrated inspection information according to at least one output item input by a user.

The outputting the integrated inspection information through a predefined graphical user interface (GUI) may include visualizing and outputting a location of defect occurrence on an electrode surface using the integrated electrode surface inspection information.

The outputting the integrated inspection information through a predefined graphical user interface (GUI) may include visualizing and outputting a dimensional trend for a plurality of batteries using the integrated dimension inspection information.

The outputting the integrated inspection information through a predefined graphical user interface (GUI) may include visualizing and outputting a location of defect occurrence on an outer surface of a battery using the integrated appearance inspection information.

### [Advantageous Effects]

According to embodiments of the present disclosure, it is possible to further improve time efficiency and accuracy of battery inspection.

### [Brief Description of the Drawings]

FIG. 1 is a block diagram of a battery inspection system according to the present invention.
FIG. 2 is a block diagram of a battery inspection system according to embodiments of the present invention.
FIG. 3 is an operational flowchart of a data processing method performed in a data processing apparatus according to embodiments of the present invention.
FIG. 4 is an example of a screen on which integrated inspection information is output according to embodiments of the present invention.
FIGS. 5 to 8 are examples of screens in which the integrated electrode surface inspection information is output according to embodiments of the present invention.
FIGS. 9 and 10 are examples of screens in which integrated dimension inspection information is output according to embodiments of the present invention.
FIGS. 11 and 12 are examples of screens on which integrated appearance inspection information is output according to embodiments of the present invention.
FIG. 13 is a block diagram of a data processing apparatus according to embodiments of the present invention.
   100: data processing apparatus
   200: battery inspection device
   300: battery manufacturing process equipment
   410: output item selection window
   420: inspection information output window

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it may be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

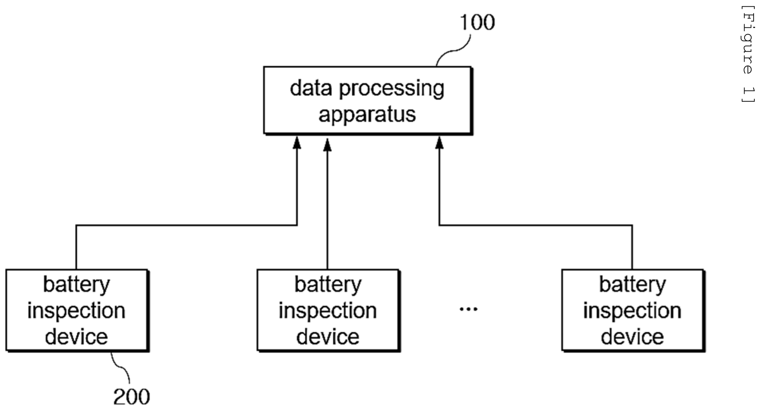

FIG. 1 is a block diagram of a battery inspection system according to the present invention.

The battery inspection system according to the present invention may be utilized to monitor whether a battery is defective, a location or a type of a defect or to analyze defect information of the battery during a process of manufacturing batteries or at a completion stage of the manufacturing.

The battery inspection system may include a data processing apparatus 100 and a plurality of battery inspection devices 200.

The battery inspection device 200 may mean a device that is applied to a specific process equipment of a battery, collects data for battery inspection, and generates battery inspection information. For example, the battery inspection device 200 may generate image data for a specific area of a battery through an image sensor placed at a specific location and generate battery inspection information including one or more of the dimensions of the battery, whether a defect has occurred, a location of defect occurrence, and a type of the defect using a predetermined image analysis algorithm.

The battery inspection device 200 may include one or more of a 2D camera and a 3D scanner. Here, the 2D camera is a device that captures a specific area of a battery or battery component to create a 2D image, and the 3D scanner means a device that creates 3D shape data for a battery or battery component.

The battery inspection device 200 may include an image analysis unit that creates battery inspection information including at least one of dimensions, defect occurrence, a location of defect occurrence, and a type of defect based on a 2D image or 3D shape data. Here, the image analysis unit may create battery inspection information using a predefined image analysis algorithm.

The data processing apparatus 100 may be connected to a plurality of battery inspection devices 200 through a network and may receive battery inspection information from each of the battery inspection devices 200. Here, the data processing apparatus 100 may create integrated inspection information for a battery using the battery inspection information received from the battery inspection devices 200.

The data processing apparatus 100 may output the integrated inspection information through a display device. Here, the data processing apparatus 100 may be connected to the display device through a network and output the integrated inspection information through a predefined graphical user interface (GUI).

The data processing apparatus 100 may visualize and output the integrated inspection information according to output items input by a user. Here, an operator may check or analyze dimensions of the battery, whether a defect has occurred, a location of defect, or a type of defect based on the integrated inspection information which is visualized and output.

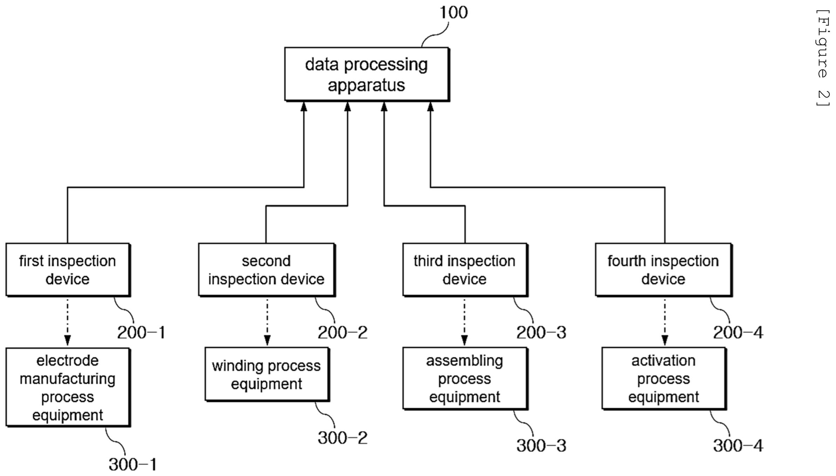

FIG. 2 is a block diagram of a battery inspection system according to embodiments of the present invention.

The battery inspection system according to embodiments of the present invention may include a plurality of battery inspection devices applied to different process equipment. Here, the battery inspection system may include one or more of a first inspection device 200-1 applied to an electrode manufacturing process equipment 300-1, a second inspection device 200-2 applied to a winding process equipment 300-2, a third inspection device 200-3 applied to an assembling process equipment 300-3, and a fourth inspection device 200-4 applied to an activation process equipment 300-4.

The first inspection device 200-1 may be applied to the electrode manufacturing process equipment 300-1 to collect a surface image of an electrode and generate surface inspection information of the electrode based on the surface image of the electrode. Here, the surface inspection information of the electrode may include one or more of an identifier of the battery (e.g., battery ID, battery tray ID, lot ID, etc.), whether the electrode surface is defective, an identifier of a defective battery, a defect location, and a defect type.

The second inspection device 200-2 may be applied to the winding process equipment 300-2, to collect at least one of surface images of the electrode or surface images of the electrode structure (e.g., jellyroll electrode structure) and generate surface inspection information of the electrode based on the collected images. Here, the surface inspection information of the electrode may include one or more of an identifier of the battery, whether a electrode surface or a surface of electrode structure is defective, an identifier of a defective battery, a defect location, and a defect type.

The third inspection device 200-3 may be applied to the assembly process equipment (300-3,) to collect three-dimensional shape data on appearance of the battery and generate battery appearance inspection information based on the three-dimensional shape data. Here, the battery appearance inspection information may include one or more of an identifier of the battery, dimensions of the battery appearance (e.g., dimension of outer diameter of a battery cell, total height, flatness, etc.), whether battery appearance is defective, an identifier of a defective battery, a defect location, and a defect type.

The fourth inspection device 200-4 may be applied to the activation process equipment 300-4, to collect three-dimensional shape data of the battery appearance and generate battery appearance inspection information based on the three-dimensional shape data. Here, the battery appearance inspection information may include one or more of an identifier of the battery, dimensions of the battery appearance, whether battery appearance is defective, an identifier of a defective battery, a defect location, and a defect type.

The data processing apparatus 100 may be connected to a plurality of battery inspection devices 200-1 to 200-4 through a network and collect battery inspection information from each of the battery inspection devices 200-1 to 200-4.

The data processing apparatus 100 may generate integrated inspection information for the battery by collating battery inspection information collected from two or more battery inspection devices.

For example, the data processing apparatus 100 may generate integrated electrode surface inspection information for the electrode by collating electrode surface inspection information collected from the first inspection device 200-1 and electrode surface inspection information collected from the second inspection device 200-2.

For another example, the data processing apparatus 100 may generate integrated dimension inspection information for the battery by collating battery appearance inspection information collected from the third inspection device 200-3 and battery appearance inspection information collected from the fourth inspection device 200-4.

For another example, the data processing apparatus 100 may generate integrated appearance inspection information of the battery by collating the electrode surface inspection information collected from the second inspection device 200-2, the battery appearance inspection information collected from the third inspection device 200-3, and the battery appearance inspection information collected from the fourth inspection device 200-4.

The data processing apparatus 100 may output the integrated inspection information through a predefined GUI. Here, the data processing apparatus 100 may visualize and output the integrated inspection information according to output items input by a user.

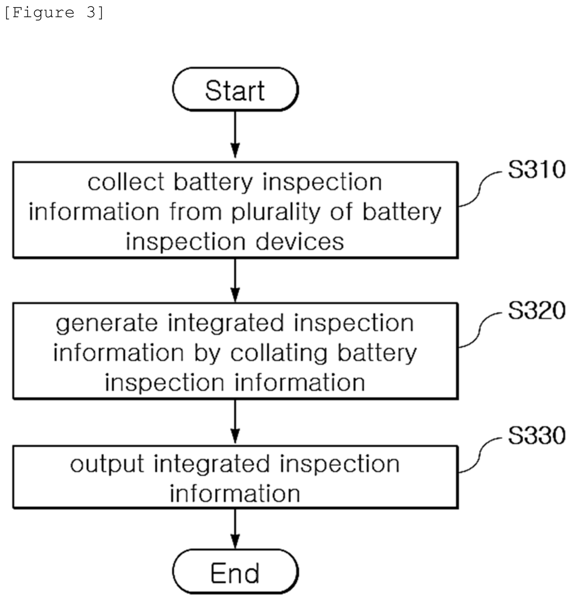

FIG. 3 is an operational flowchart of a data processing method performed in a data processing apparatus according to embodiments of the present invention.

The data processing apparatus may collect battery inspection information from a plurality of battery inspection devices (S310). Here, the data processing apparatus may receive battery inspection information generated by the battery inspection devices at every determined times (for example, every 1 second).

The data processing apparatus may collect battery inspection information from battery inspection devices applied to different process equipment. Here, the data processing apparatus may receive battery inspection information from each of a first inspection device applied to electrode manufacturing process equipment, a second inspection device applied to winding process equipment, a third inspection device applied to assembling process equipment, and a fourth inspection device applied to activation process equipment. Specifically, the data processing apparatus may receive electrode surface inspection information from the first inspection device, receive electrode surface inspection information from the second inspection device, receive battery appearance inspection information from the third inspection device, and receive battery appearance inspection information from the fourth inspection device.

The data processing apparatus may collate battery inspection information collected from two or more battery inspection devices to generate integrated inspection information for the battery (S320).

The data processing apparatus may identify identical batteries using the battery ID included in each of the battery inspection information, and may merge dimensions, defect existence, defect location, or defect type for each of the batteries to generate integrated inspection information. Here, the integrated inspection information may include one or more of a battery identifier, dimensions, defect existence, defect location, defect type, and the process equipment where the defect occurred for each of the plurality of batteries.

In an embodiment, the data processing apparatus may collate electrode surface inspection information collected from a first inspection device and electrode surface inspection information collected from a second inspection device to generate integrated electrode surface inspection information for the electrode. Here, the integrated electrode surface inspection information may include one or more of a battery identifier, whether a defect occurred on electrode surface, a defect location, a defect type, and process equipment where the defect occurred, for each of the batteries.

In another embodiment, the data processing apparatus may generate integrated dimension inspection information of the battery by collating the battery appearance inspection information collected from the third inspection device and the battery appearance inspection information collected from the fourth inspection device. Here, the integrated dimension inspection information may include one or more of a battery identifier, an outer diameter, a total height, flatness, whether a defect occurred, a defect location, a defect type, and process equipment where the defect occurred, for each of the batteries.

In another embodiment, the data processing apparatus may generate integrated dimension inspection information of the battery by collating the electrode surface inspection information collected from the second inspection device, the battery appearance inspection information collected from the third inspection device, and the battery appearance inspection information collected from the fourth inspection device. Here, the integrated dimension inspection information may include one or more of a battery identifier, whether a battery outer surface or inner electrode is defective, a defect location, a defect type, and process equipment where the defect occurred, for each of the batteries.

The data processing apparatus may output the integrated inspection information through a predefined GUI (S330). Here, the data processing apparatus may visualize and output the integrated inspection information according to output items input by a user.

For example, if the output of the integrated electrode surface inspection information is requested by a user, the data processing apparatus may visualize the location of the defect occurrence on the electrode surface included in the integrated electrode surface inspection information and output the location of the defect occurrence on the electrode surface through the GUI.

For another example, if the output of the integrated dimension inspection information is requested by a user, the data processing apparatus may visualize and output dimensional trend in the form of a graph based on the dimensions of a plurality of batteries included in the integrated dimension inspection information.

For another example, if the output of the integrated appearance inspection information is requested by a user, the data processing apparatus may visualize the location of the defect occurrence on the outer surface of the battery included in the integrated appearance inspection information and output it through the GUI.

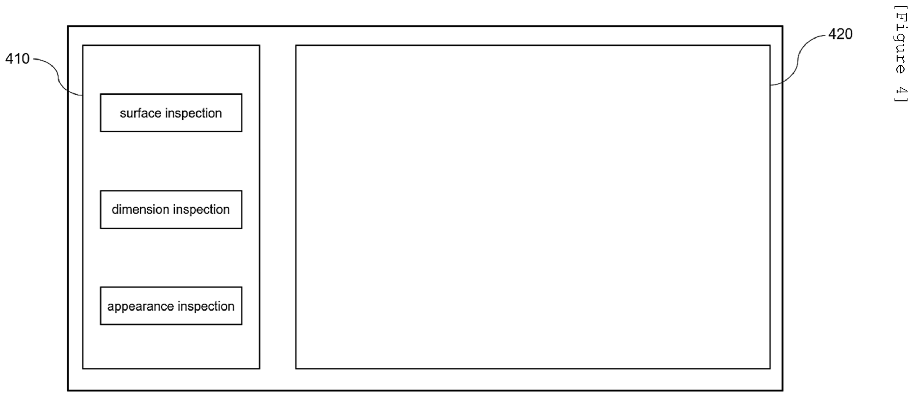

FIG. 4 is an example of a screen on which integrated inspection information is output according to embodiments of the present invention.

Referring to FIG. 4, the data processing apparatus may output integrated inspection information corresponding to at least one output item input by a user by visualizing the integrated inspection information through a GUI. Here, the GUI may include an output item selection window (410) and an inspection information output window (420).

The data processing apparatus may receive a selection signal for at least one output item input by a user through the output item selection window (410). Here, the output item may include one or more of surface inspection, dimension inspection, and appearance inspection.

When surface inspection is selected as an output item, the data processing apparatus may output integrated electrode surface inspection information by visualizing it through the inspection information output window (420).

In addition, when dimension inspection is selected as an output item, the data processing apparatus may output integrated dimension inspection information by visualizing it through the inspection information output window (420).

Furthermore, when the appearance inspection is selected as an output item, the data processing apparatus may output integrated appearance inspection information by visualizing it through the inspection information output window (420).

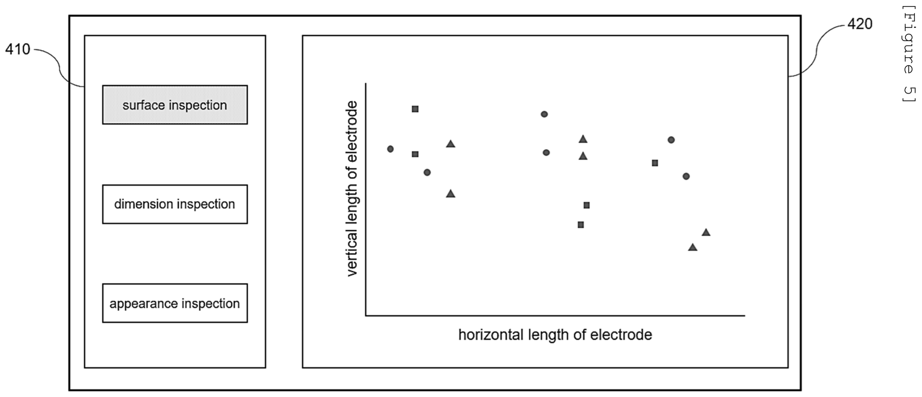

FIGS. 5 to 8 are examples of screens in which the integrated electrode surface inspection information is output according to embodiments of the present invention.

Referring to FIGS. 5 to 8, the data processing apparatus may output the integrated electrode surface inspection information by visualizing it in response to detailed output items input by a user.

Referring to FIG. 5, when a specific period or a specific group (e.g., lot ID) is input by the user, the data processing apparatus may visualize and output defect occurrence locations for battery electrodes included in the input period or group. Here, the defect occurrence locations may be visualized in the form of a two-dimensional graph, as shown in FIG. 5. In addition, when visualizing the defect occurrence locations, the data processing apparatus may output the defect occurrence locations by visualizing them in different shapes (e.g., squares, triangles, circles, etc.) for each defect type (e.g., craters, protrusions, etc.) so that the defect types may be intuitively distinguished.

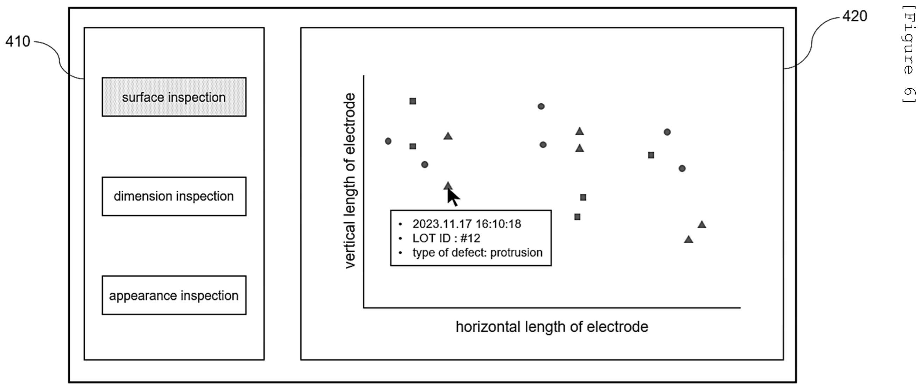

Referring to FIG. 6, when a selection signal for a specific defective location is input by a user, the data processing apparatus may output detailed inspection information for the corresponding defective location. Here, the detailed inspection information may include one or more of a defect detection time for the corresponding defective location, a battery identifier, a defect type, location coordinates, and a process equipment where the defect occurred.

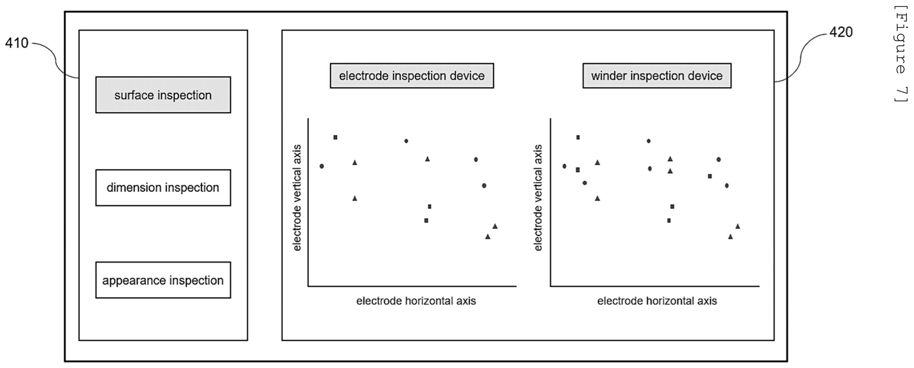

Referring to FIG. 7, when a selection signal for a plurality of battery inspection devices is input by a user, the data processing apparatus may visualize and output surface inspection information generated by each of the corresponding battery inspection devices. For example, as illustrated in FIG. 7, when a selection signal for an electrode inspection device (first inspection device) and a winder inspection device (second inspection device) is input, the data processing apparatus may distinguish and output the location of an electrode defect generated in an electrode manufacturing process and the location of an electrode defect generated in a winding process based on the electrode surface inspection information collected from the first inspection device and second inspection device.

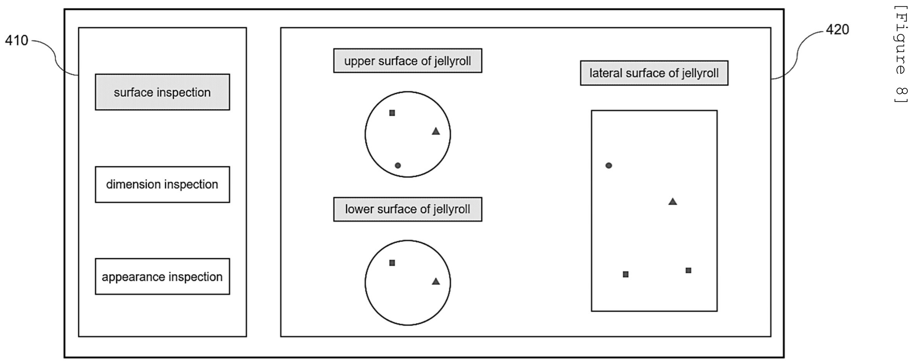

Referring to FIG. 8, when a user inputs a request signal for outputting surface inspection information of an electrode structure, the data processing apparatus may visualize and output surface inspection information for at least one of an upper surface, a lower surface, and a lateral surface of electrode structure. Here, the location of a defect occurrence on a surface of the electrode structure may be visualized by indicating the defect occurrence on a shape corresponding to each of the upper surface, the lower surface, and the side surface of the electrode structure, as illustrated in FIG. 8.

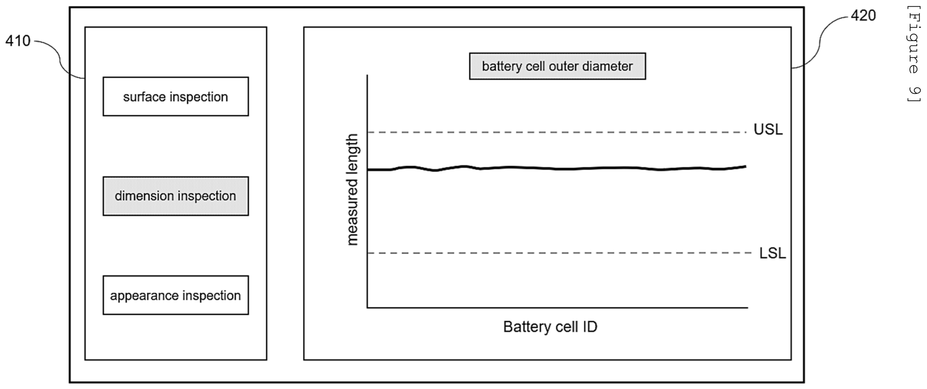

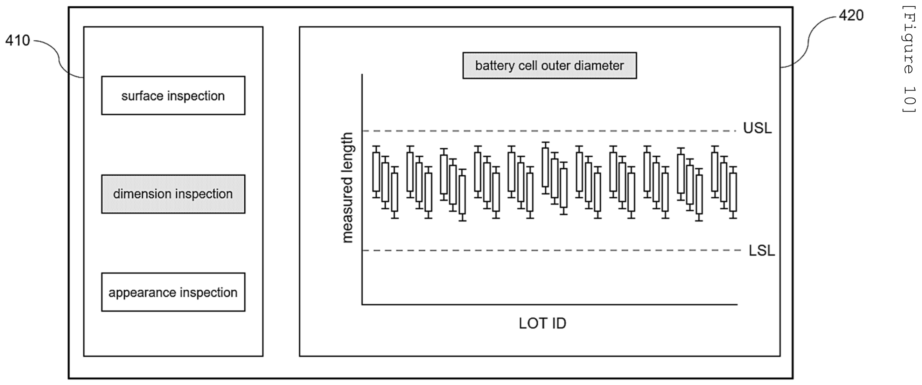

FIGS. 9 and 10 are examples of screens in which integrated dimension inspection information is output according to embodiments of the present invention.

Referring to FIGS. 9 and 10, the data processing apparatus may visualize and output integrated dimension inspection information corresponding to detailed output items input by a user.

Referring to FIG. 9, when a specific period or a specific group (e.g., lot ID) is input by the user, the data processing apparatus may visualize and output dimensional trend of batteries included in the input period or group. Here, the dimensional trend of batteries may be visualized in the form of a two-dimensional graph as shown in FIG. 9.

Referring to FIG. 10, when visualizing battery dimension information, the data processing apparatus may output the maximum dimension value, an average dimension value, and the minimum dimension value for each battery group, as well as the upper specification limit (USL) and the lower specification limit (LSL). For example, the data processing apparatus may output the maximum outer diameter value, an average outer diameter value, and the minimum outer diameter value together with the USL and LSL by LOT, as illustrated in FIG. 10.

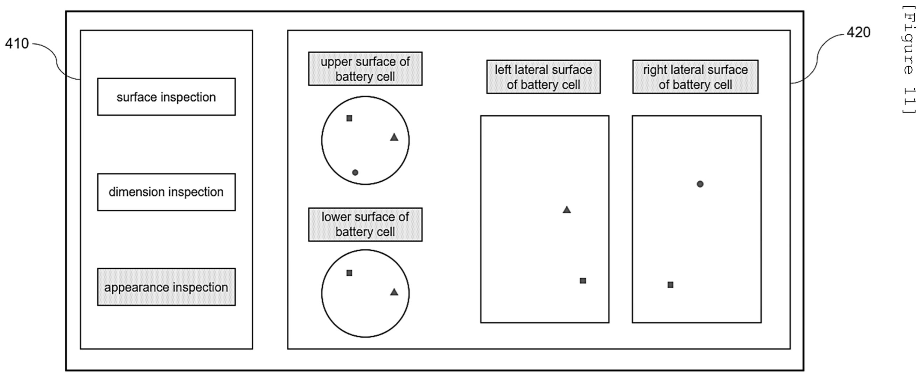

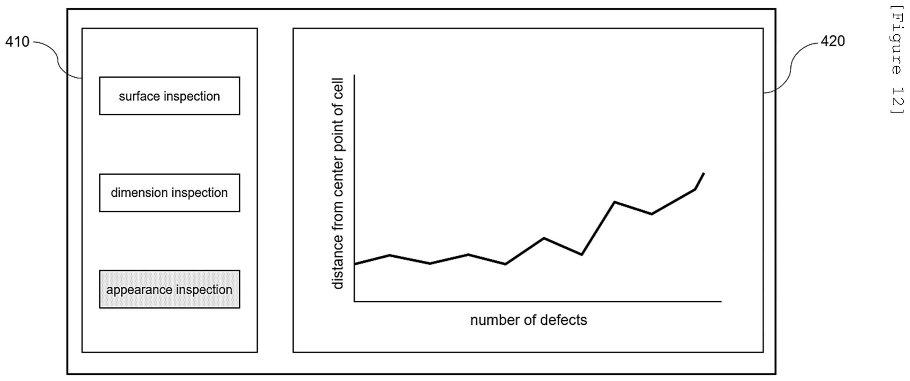

FIGS. 11 and 12 are examples of screens on which integrated appearance inspection information is output according to embodiments of the present invention.

Referring to FIGS. 11 and 12, the data processing apparatus may visualize and output integrated appearance inspection information corresponding to detailed output items input by a user.

Referring to FIG. 11, when a specific period or a specific group (e.g., lot ID) is input by a user, the data processing apparatus may visualize and output at least one location of defect on the battery external surface for batteries included in the input period or group. Here, the location of defect may be visualized by being displayed on a shape corresponding to each of the upper surface, the lower surface, and the lateral surface of a battery cell, as illustrated in FIG. 11. Meanwhile, since the integrated appearance inspection information reflects surface inspection information of the electrode structure collected from the second inspection device (winder inspection device) in addition to the appearance inspection information collected from the third and fourth inspection devices, the location of a defect occurring in the electrode structure located inside the battery may be displayed together on the outer surface of the battery. Referring to FIG. 12, when a user inputs a request signal for outputting defect distribution information, the data processing apparatus may generate and output defect distribution information based on the integrated appearance inspection information. Here, the defect distribution information may be visualized in the form of a two-dimensional graph in which the distance from the center point of the battery cell and the number of defects occurring by distance are expressed, as illustrated in FIG. 12.

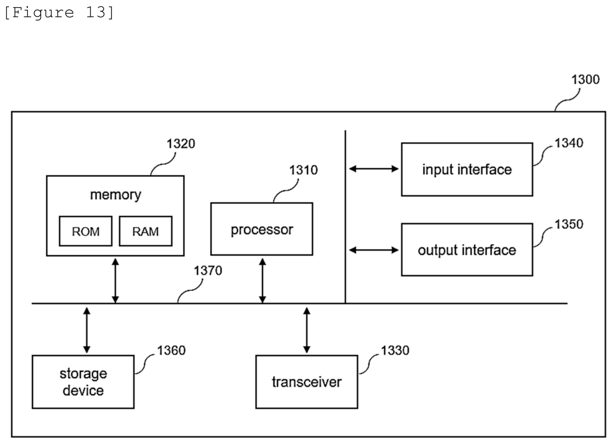

FIG. 13 is a block diagram of a data processing apparatus according to embodiments of the present invention.

The data processing apparatus 1300 according to embodiments of the present invention may include a processor 1310, a memory 1320 that stores at least one instruction executed through the processor, and a transceiver 1330 connected to a network to perform communication.

The at least one instruction may include an instruction to collect battery inspection information from a plurality of battery inspection devices; an instruction to generate integrated inspection information for the plurality of battery by collating battery inspection information collected from the plurality of battery inspection devices; and an instruction to output the integrated inspection information through a predefined graphical user interface (GUI).

The instruction to collect battery inspection information may include an instruction to collect battery inspection information from battery inspection devices which are applied to different manufacturing process equipment.

The instruction to collect battery inspection information may include an instruction to collect battery inspection information from each of a first inspection device applied to an electrode manufacturing process equipment, a second inspection device applied to a winding process equipment, a third inspection device applied to an assembling process equipment, and a fourth inspection device applied to an activation process equipment.

The instruction to generate integrated inspection information may include an instruction to generate integrated electrode surface inspection information by collating electrode surface inspection information collected from a first inspection device applied to an electrode manufacturing process equipment and electrode surface inspection information collected from a second inspection device applied to a winding process equipment.

The instruction to generate integrated inspection information may include an instruction to generate integrated dimension inspection information of the battery by collating appearance inspection information of the battery collected from a third inspection device applied to an assembly process equipment and appearance inspection information of the battery collected from a fourth inspection device applied to an activation process equipment.

The instruction to generate integrated inspection information may include an instruction to generate integrated appearance inspection information of the battery by collating electrode surface inspection information collected from a second inspection device applied to a winding process equipment, appearance inspection information of the battery collected from a third inspection device applied to an assembly process equipment, and appearance inspection information of the battery collected from a fourth inspection device applied to an activation process equipment.

The instruction to output the integrated inspection information through the predefined graphical user interface may include an instruction to visualize and output the integrated inspection information according to at least one output item input by a user.

The instruction to output the integrated inspection information through the predefined graphical user interface may include an instruction to visualize and output a location of defect occurrence on an electrode surface using the integrated electrode surface inspection information.

The instruction to output the integrated inspection information through the predefined graphical user interface may include an instruction to visualize and output a dimensional trend for a plurality of batteries using the integrated dimension inspection information.

The instruction to output the integrated inspection information through the predefined graphical user interface may include an instruction to visualize and output a location of defect occurrence on an outer surface of a battery using the integrated appearance inspection information.

Meanwhile, the data processing apparatus 1300 according to embodiments of the present invention may further include an input interface 1340, an output interface 1350, a storage device 1360, etc. Respective components included in the data processing apparatus 1300 may be connected by a bus 1370 and may communicate with each other.

Here, the processor 1310 may mean a central processing unit (CPU), a graphics processing unit (GPU), or a dedicated processor on which methods according to embodiments of the present invention are performed. The memory (or storage device) may include at least one of a volatile storage medium and a non-volatile storage medium. For example, the memory may include at least one of read only memory (ROM) and random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A data processing apparatus for providing battery inspection information, the data processing apparatus comprising:
at least one processor; and
a memory configured to store at least one instruction executed by the at least one processor,
wherein the at least one instruction includes:
an instruction to collect battery inspection information from a plurality of battery inspection devices;
an instruction to generate integrated inspection information for a plurality of battery by collating battery inspection information collected from the plurality of battery inspection devices; and
an instruction to output the integrated inspection information through a predefined graphical user interface.

2. The data processing apparatus of claim 1, wherein the instruction to collect battery inspection information includes:
an instruction to collect battery inspection information from battery inspection devices which are applied to different manufacturing process equipment.

3. The data processing apparatus of claim 2, wherein the instruction to collect battery inspection information includes:
an instruction to collect battery inspection information from each of a first inspection device applied to an electrode manufacturing process equipment, a second inspection device applied to a winding process equipment, a third inspection device applied to an assembling process equipment, and a fourth inspection device applied to an activation process equipment.

4. The data processing apparatus of claim 1, wherein the instruction to generate integrated inspection information includes:
an instruction to generate integrated electrode surface inspection information by collating electrode surface inspection information collected from a first inspection device applied to an electrode manufacturing process equipment and electrode surface inspection information collected from a second inspection device applied to a winding process equipment.

5. The data processing apparatus of claim 1, wherein the instruction to generate integrated inspection information includes:
an instruction to generate integrated dimension inspection information of the battery by collating appearance inspection information of the battery collected from a third inspection device applied to an assembly process equipment and appearance inspection information of the battery collected from a fourth inspection device applied to an activation process equipment.

6. The data processing apparatus of claim 1, wherein the instruction to generate integrated inspection information includes:
an instruction to generate integrated appearance inspection information of the battery by collating electrode surface inspection information collected from a second inspection device applied to a winding process equipment, appearance inspection information of the battery collected from a third inspection device applied to an assembly process equipment, and appearance inspection information of the battery collected from a fourth inspection device applied to an activation process equipment.

7. The data processing apparatus of claim 1, wherein the instruction to output the integrated inspection information through the predefined graphical user interface includes:
an instruction to visualize and output the integrated inspection information according to at least one output item input by a user.

8. The data processing apparatus of claim 4, wherein the instruction to output the integrated inspection information through the predefined graphical user interface includes:
an instruction to visualize and output a location of defect occurrence on an electrode surface using the integrated electrode surface inspection information.

9. The data processing apparatus of claim 5, wherein the instruction to output the integrated inspection information through the predefined graphical user interface includes:
an instruction to visualize and output a dimensional trend for a plurality of batteries using the integrated dimension inspection information.

10. The data processing apparatus of claim 6, wherein the instruction to output the integrated inspection information through the predefined graphical user interface includes:
an instruction to visualize and output a location of defect occurrence on an outer surface of a battery using the integrated appearance inspection information.

11. A data processing method for providing battery inspection information, the data processing method comprising:
collecting battery inspection information from a plurality of battery inspection devices;
generating integrated inspection information for a plurality of battery by collating battery inspection information collected from the plurality of battery inspection devices; and
outputting the integrated inspection information through a predefined graphical user interface.

12. The data processing method of claim 15, wherein the collecting battery inspection information includes:
collecting battery inspection information from battery inspection devices which are applied to different manufacturing process equipment.

13. The data processing method of claim 12, wherein the collecting battery inspection information includes:
collecting battery inspection information from each of a first inspection device applied to an electrode manufacturing process equipment, a second inspection device applied to a winding process equipment, a third inspection device applied to an assembling process equipment, and a fourth inspection device applied to an activation process equipment.

14. The data processing method of claim 11, wherein the generating the integrated inspection information includes:
generating integrated electrode surface inspection information by collating electrode surface inspection information collected from a first inspection device applied to an electrode manufacturing process equipment and electrode surface inspection information collected from a second inspection device applied to a winding process equipment.

15. The data processing method of claim 11, wherein the generating the integrated inspection information includes:
generating integrated dimension inspection information of the battery by collating appearance inspection information of the battery collected from a third inspection device applied to an assembly process equipment and appearance inspection information of the battery collected from a fourth inspection device applied to an activation process equipment.

16. The data processing method of claim 11, wherein the generating the integrated inspection information includes:
generating integrated appearance inspection information of the battery by collating electrode surface inspection information collected from a second inspection device applied to a winding process equipment, appearance inspection information of the battery collected from a third inspection device applied to an assembly process equipment, and appearance inspection information of the battery collected from a fourth inspection device applied to an activation process equipment.

17. The data processing method of claim 11, wherein the outputting the integrated inspection information through a predefined graphical user interface includes:
visualizing and outputting the integrated inspection information according to at least one output item input by a user.

18. The data processing method of claim 14, wherein the outputting the integrated inspection information through a predefined graphical user interface includes:
visualizing and outputting a location of defect occurrence on an electrode surface using the integrated electrode surface inspection information.

19. The data processing method of claim 15, wherein the outputting the integrated inspection information through a predefined graphical user interface includes:
visualizing and outputting a dimensional trend for a plurality of batteries using the integrated dimension inspection information.

20. The data processing method of claim 16, wherein the outputting the integrated inspection information through a predefined graphical user interface includes:
visualizing and outputting a location of defect occurrence on an outer surface of a battery using the integrated appearance inspection information.
